# EUROPEAN PATENT APPLICATION

(11) **EP 4 372 110 A1**
(43) Date of publication of application: **22.05.2024**
(21) Application number: 22839982.0
(22) Date of filing: 25.03.2022
(51) Int. Cl.: C22B 1/04, C22B 5/02, C22B 7/00, C22B 15/00, C22B 23/02, C22B 9/10

(54) **PRODUCTION METHOD FOR VALUABLE METALS**

(30) Priority: 16.07.2021 JP 2021118175
(71) Applicant: SUMITOMO METAL MINING CO., LTD., Tokyo 105-8716 (JP)
(72) Inventor: YAMASHITA, Yu, Niihama-shi, Ehime 792-0002 (JP); NAGAKURA, Toshihiko, Niihama-shi, Ehime 792-0002 (JP); HAGIO, Tomoya, Niihama-shi, Ehime 792-0002 (JP)
(74) Representative: Jones, Nicholas Andrew
(86) International application number: PCT/JP2022/014653
(87) International publication number: WO 2023/286387

(57) **Abstract**

Provided is a method by which it is possible to safely and efficiently collect valuable metals from raw material including waste lithium-ion batteries or the like. The present invention is a method which is for producing valuable metals from raw material that contains valuable metals including Cu, Ni, and Co and which includes: a step for preparing raw material including at least Li, Al, and the valuable metals; a step for obtaining a reduction that includes slag and an alloy containing the valuable metals by subjecting the raw material to a reduction melting treatment; and a slag separation step for collecting the alloy by separating out the slag from the reduction, wherein, in a step for adding a flux containing calcium (Ca) to the raw material and performing reduction and melting thereof, the reduction melting treatment is performed such that the liquidus line temperature of ternary Al₂O₃-Li₂O-CaO slag in a phase diagram is greater than the liquidus line temperature of a ternary Cu-Ni-Co alloy in a phase diagram.

## Description

### TECHNICAL FIELD

The present invention relates to a method for producing a valuable metal from a raw material such as a discarded lithium ion battery.

### BACKGROUND ART

Recently, lithium ion batteries have become popular as secondary batteries which are light and have large output. A well-known lithium ion battery has a structure in which a negative electrode material, a positive electrode material, a separator, and an electrolytic solution are sealed in an outer can.

For example, the outer can is made of a metal such as aluminum (Al) or iron (Fe). The negative electrode material is composed of a negative electrode active material (graphite or the like) fixed to a negative electrode current collector (copper foil or the like). The positive electrode material is composed of a positive active material (e.g., lithium nickelate or lithium cobaltate) fixed to a positive current collector (e.g., aluminum foil). The separator is composed of a porous resin film of polypropylene or the like. The electrolytic solution includes an electrolyte such as lithium hexafluorophosphate (LiPF₆).

One of the main applications of lithium ion batteries includes hybrid cars and electric vehicles. Therefore, it is expected that a large amount of mounted lithium ion batteries are likely to be discarded in the future according to the lifecycle of automobiles. Moreover, some of lithium ion batteries may be discarded as defective products during production. There is a need to reuse such used batteries or defective batteries generated during production (hereinafter referred to as "discarded lithium ion batteries" or a "discarded lithium ion battery") as a resource.

As a reusing technique, a pyrometallurgical smelting process has been proposed, in which a whole amount of discarded lithium ion batteries is melted in a high-temperature furnace. The pyrometallurgical smelting process is a method of subjecting pulverized discarded lithium ion batteries to melting treatment, and separating and recovering a valuable metal as a recovery target, typified by cobalt (Co), nickel (Ni), and copper (Cu), and a metal having a low added value typified by iron (Fe) and aluminum (Al), using a difference in oxygen affinity therebetween. In this method, a metal having a low added value is oxidized as much as possible to form a slag, whereas a valuable metal is recovered as an alloy by suppressing oxidation thereof as much as possible.

Patent Document 1 discloses a method of recovering valuable metals containing nickel and cobalt from a waste battery of a lithium ion battery containing nickel and cobalt. Specifically, a process has been proposed, which includes a melting step of melting a waste battery to obtain a molten product, an oxidation step of oxidizing the waste battery, the step being applied to the molten product or the waste battery before the melting step, and a slag separation step of separating a slag from the molten product to recover an alloy containing a valuable metal. In the melting step, calcium oxide is added to lower liquidus temperature of the slag to recover the valuable metal. Citation List

### Patent Document

Patent Document 1: Japanese Patent No. 6819827

### DISCLOSURE OF THE INVENTION

### Problems to be Solved by the Invention

However, a problem still remains even in the technology disclosed in Patent Document 1. For example, in the method disclosed in Patent Document 1, if the flux is added and the slag liquidus temperature is excessively lowered, there is a problem that a refractory material of a furnace wall of a processing furnace is eroded. When such erosion occurs, there is a risk that the treated material leaks to the outside of the furnace. This is a problem in terms of safety, as well as a cost required to maintain the refractory material of the furnace wall will be enormous, and thus the valuable metal cannot be recovered inexpensively.

The present invention has been proposed in view of the above circumstances, and an object of the present invention is to provide a method for safely and efficiently recovering a valuable metal from a raw material including a waste lithium ion battery and the like.

### Means for Solving the Problems

The present inventors have intensively studied. As a result, the present inventors have found that the problem described above can be solved by performing reductive melting treatment so that liquidus temperature in a state diagram of a slag to be generated in a step where a raw material is subjected to the reductive melting treatment is higher than liquidus temperature in a state diagram of an alloy to be generated, arriving at the completion of the present invention.

A first aspect of the present invention relates to a method of producing a valuable metal from a raw material including the valuable metal including copper (Cu), nickel (Ni), and cobalt (Co), the method including: a preparation step of preparing a raw material containing at least lithium (Li), aluminum (Al), and the valuable metal; a reductive melting step of subjecting the raw material to a reductive melting treatment to obtain a reduced product containing a slag and an alloy containing the valuable metal; and a slag separation step of separating the slag from the reduced product to recover the alloy, in which in one or both of the preparation step and the reductive melting step, a flux containing calcium (Ca) is added to the raw material, and in the reductive melting step, the reductive melting treatment is performed so that liquidus temperature in a state diagram of an Al₂O₃-Li₂O-CaO ternary slag is higher than liquidus temperature in a state diagram of a Cu-Ni-Co ternary alloy.

A second aspect of the present invention relates to the method for producing a valuable metal as described in the first aspect, in which, in the reductive melting step, the reductive melting treatment is performed so that a mass ratio of Al₂O₃/(Al₂O₃+CaO+Li₂O) in the slag to be generated is 0.5 or more and 0.65 or less, and a mass ratio of Cu/(Cu+Ni+Co) in the alloy to be generated is 0.2 or more.

A third aspect of the present invention relates to the method for producing a valuable metal as described in the first or second aspect, in which the raw material includes a discarded lithium ion battery.

A fourth aspect of the present invention relates to the method for producing a valuable metal as described in any one of the first to third aspects, in which a melting furnace to be used in the reductive melting step is provided with a means for cooling a furnace wall from outside.

A fifth aspect of the present invention relates to the method for producing a valuable metal as described in any one of the first to fourth aspects, further including an oxidative roasting step of oxidatively roasting the raw material into an oxidatively roasted product prior to the reductive melting treatment, and subjecting the obtained oxidatively roasted product to the reductive melting treatment.

### Effects of the Invention

According to the present invention, a valuable metal can be safely and efficiently recovered from a raw material including a discarded lithium ion battery and the like.

### BRIEF DESCRIPTION OF THE DRAWINGS

FIG. 1 is a chart showing a state diagram of an Al₂O₃-CaO-Li₂O system according to thermodynamic calculation software (FactSage), in which test results in Examples have been plotted; and
FIG. 2 is a process diagram indicating an example of a flow of a method for recovering a valuable metal from a discarded lithium ion battery.

### PREFERRED MODE FOR CARRYING OUT THE INVENTION

Hereinafter, a specific embodiment of the present invention (hereinafter referred to as "present embodiment") will be described. The present invention is not limited to the following embodiment, and various modifications can be made in a scope where the gist of the present invention is unchanged.

### <<1. Process for Recovering Valuable Metal>>

The method for producing a valuable metal according to the present embodiment is a method for separating and recovering a valuable metal from a raw material containing at least lithium (Li), Aluminum (Al), and a valuable metal. Therefore, the present method can also be referred to as a recovery method of a valuable metal. The method according to the present embodiment is mainly composed of a pyrometallurgical smelting process but may be composed of a pyrometallurgical smelting process and a hydrometallurgical smelting process.

Specifically, the method according to the present embodiment includes the following steps; a step of preparing a raw material containing lithium (Li), aluminum (Al), and a valuable metal (preparation step), a step of subjecting the prepared raw material to a reductive melting treatment to obtain a reduced product (molten product) containing a slag and an alloy containing the valuable metal (reductive melting step), and a step of separating the slag from the obtained reduced product to recover the alloy (slag separation step).

Here, the valuable metal constituting the alloy to be recovered includes copper (Cu), nickel (Ni), cobalt (Co), and a combination thereof, and the valuable metal includes at least one type of metal or alloy selected from the group consisting of copper, nickel, cobalt, and a combination thereof. In this method, in one or both of the preparation step and the reductive melting step, a flux containing calcium (Ca) is added to the raw material.

Therefore, the slag to be generated by the treatment in the reductive melting step includes a ternary slag (Al₂O₃-Li₂O-CaO ternary slag) consisting of aluminum oxide (Al₂O₃), lithium oxide (Li₂O), and calcium oxide (CaO). The alloy to be generated includes a ternary alloy (Cu-Ni-Co ternary alloy) consisting of copper (Cu), nickel (Ni), and cobalt (Co).

The method according to the present embodiment is characterized in that the reductive melting treatment is performed so that liquidus temperature in a state diagram of an Al₂O₃-Li₂O-CaO ternary slag is higher than liquidus temperature in a state diagram of a Cu-Ni-Co ternary alloy.

### [Preparation Step]

In the preparation step, a raw material to be processed is prepared. As described above, the raw material is a target of a treatment to recover a valuable metal and contains lithium (Li) and aluminum (Al) and further a valuable metal selected from the group consisting of copper (Cu), nickel (Ni), and cobalt (Co). The raw material may contain these components (Li, Al, Cu, Ni, Co) in the form of metal or in the form of compound such as oxides. The raw material may contain an inorganic component or an organic component other than these components.

As the raw material, the target thereof is not particularly limited, and examples thereof include a discarded lithium ion battery, a dielectric material (capacitor), and a magnetic material. Further, the form thereof is not limited as long as it is suitable for the treatment in the reductive melting step described later. In the preparation step, the raw material may be subjected to a pulverization treatment or the like to obtain a suitable form. Further, in the preparation step, the raw material may be subjected to a heat treatment, a sorting treatment, or the like to remove unnecessary components such as moisture or organic matter.

In the preparation step, a flux containing calcium (Ca) may be added to the raw material. The flux to be added will be described in detail later. In the method according to the present embodiment, a flux is added in one or both of the preparation step and the reductive melting step.

### [Reductive Melting Step]

In the reductive melting step, the prepared raw material is charged into a melting furnace, and the raw material is heated to perform the reductive melting treatment to obtain a reduced product. The reduced product includes an alloy and a slag separately.

The reductive melting treatment is a treatment in which a raw material is heated and reductively melted in a melting furnace to obtain a reduced product. The purpose of this treatment is to reduce and melt valuable metals (Cu, Ni, Co) and recover them as an integrated alloy, while converting a metal (Al or the like) having a low added value contained in the raw material to an oxide. After the reductive melting treatment, an alloy in a molten state is obtained. In the case of performing an oxidative roasting treatment, which will be described later, prior to the reductive melting treatment, the resultant oxidatively roasted product is charged into a melting furnace to heat and reductively melt the oxidatively roasted product. Thereby, the metal (Al or the like) having a low added value oxidized by the oxidative roasting treatment is maintained as an oxide, whereas the valuable metals (Cu, Ni, Co) are reduced and melted to be recovered as an integrated alloy.

In the reductive melting treatment, it is preferable to introduce a reducing agent. Carbon and/or carbon monoxide is preferably used as a reducing agent. Carbon has ability to easily reduce valuable metals (Cu, Ni, Co) as a recovery target. For example, 2 moles of valuable metal oxides (copper oxide, nickel oxide, etc.) can be reduced with 1 mole of carbon. Further, a reduction method using carbon or carbon monoxide is extremely safer than a method using a metal reducing agent (for example, a thermite reaction method using aluminum).

As carbon, artificial graphite and/or natural graphite can be used. If there is no possibility of impurity contamination, coal or coke can be used.

The alloy produced by reductive melting contains a valuable metal as described above. Therefore, components (alloys) containing a valuable metal and other components can be separated in the reduced product. This is because the metal having a low added value (Al or the like) has a high oxygen affinity, whereas the valuable metal has a low oxygen affinity. For example, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. That is, aluminum (Al) most easily oxidizes, while copper (Cu) least easily oxidizes. Therefore, a metal (Al or the like) having a low added value easily oxidizes and becomes a slag, and valuable metals (Cu, Ni, Co) are reduced and become a metal (alloy). In this way, a metal having a low added value and valuable metals can be efficiently separated into a slag and an alloy.

Here, in the reductive melting treatment, a flux containing calcium (Ca) may be added to the raw material. In the method according to the present embodiment, a flux is added in one or both of the preparation step and the reductive melting step. The flux contains calcium (Ca) as a main component, and examples thereof include calcium oxide (CaO) and calcium carbonate (CaCO₃). However, when a required amount of a calcium component is contained in the raw material to be processed, the flux may not be added.

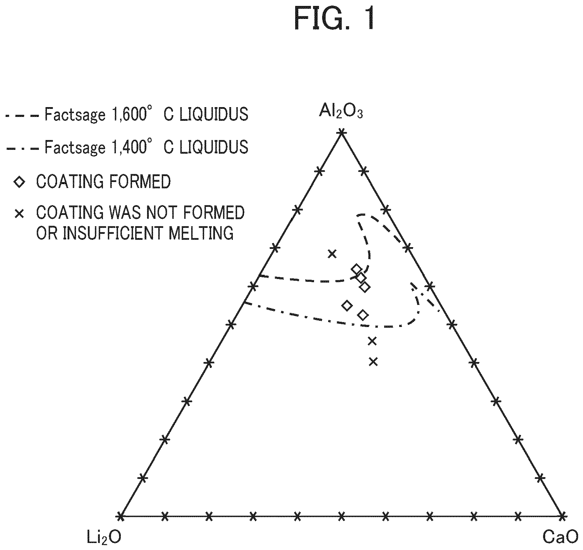

Further, the method according to the present embodiment is characterized in that the reductive melting treatment is performed so that liquidus temperature in a state diagram of an Al₂O₃-Li₂O-CaO ternary slag to be generated is higher than liquidus temperature in a state diagram of a Cu-Ni-Co ternary alloy to be generated. Note that FIG. 1 is a state diagram of the Al₂O₃-Li₂O-CaO- ternary slag, and broken lines in FIG. 1 indicate liquidus calculated by thermodynamic calculation software (FactSage).

Thereby, it is possible to safely perform treatment in the reductive melting treatment while suppressing the erosion of refractory materials constituting a furnace wall of a melting furnace and achieving a high recovery ratio of the valuable metal.

Lithium (Li) and calcium (Ca) contribute to a decrease in the melting temperature of the slag. Therefore, reaction conditions should be set so that the relationship described in the reductive melting treatment: the liquidus temperature in a state diagram of an Al₂O₃-Li₂O-CaO ternary slag is higher than the liquidus temperature in a state diagram of a Cu-Ni-Co ternary alloy (relationship "slag liquidus temperature > alloy liquidus temperature") is satisfied. In a case where phosphorus is contained in the raw material, when the amount of calcium (Ca) in the slag is large, phosphorus can be easily removed. This is because phosphorus becomes an acidic oxide when oxidized, whereas calcium (Ca) becomes a basic oxide when oxidized. Therefore, the larger the amount of calcium (Ca) in the slag generated, the more basic the slag composition is, and thereby the slag comes to easily incorporate phosphorus, facilitating removal of phosphorus.

More specifically, the reductive melting treatment is performed so that a mass ratio represented by aluminum oxide (Al₂O₃)/ (aluminum oxide (Al₂O₃) + calcium oxide (CaO) + lithium oxide (Li₂O)) in the slag to be generated is controlled to be 0.5 or more and 0.65 or less, and a mass ratio of copper (Cu)/(copper (Cu) + nickel (Ni) + cobalt (Co)) in the alloy to be generated is 0.2 or more.

With regard to component compositions of the slag to be generated, if the mass ratio represented by Al₂O₃/(Al₂O₃+CaO+Li₂O) is excessively low, specifically, the mass ratio is less than 0.5, the liquidus temperature of the ternary slag Al₂O₃-Li₂O-CaO is too low, and the melting point becomes less than 1,400°C, resulting in a relationship, "slag liquidus temperature < alloy liquidus temperature". In such a situation, it is unavoidable to overheat the slag to above the melting point of the slag in order to achieve a molten state of the slag. Then, the slag does not easily form a coating layer even when a furnace wall of a melting furnace is cooled, resulting in erosion of refractory materials of the furnace wall. Here, since the melting point of an alloy composed of copper, nickel, and cobalt obtained is approximately 1,300°C to 1,400°C, for example, in order to perform operation so that the temperature of the metal is 1,400°C to 1,500°C, that is, in order to transfer heat from the slag to the metal, it is necessary to set the temperature of the slag to 1,500°C to 1,600°C. However, when the melting point of the slag is lower than 1,400°C, coating cannot be effectively formed, and a refractory material of a furnace wall may be eroded.

On the other hand, if the mass ratio represented by Al₂O₃/(Al₂O₃+CaO+Li₂O) is excessively high, specifically, if the mass ratio exceeds 0.65, the liquidus temperature of the slag becomes high, and the raw material, which is a target of the melting treatment, cannot be sufficiently melted, so that the valuable metal may not be efficiently recovered.

An amount of the slag component (e.g., Al, Li, Ca) can be easily controlled by adjusting a composition of the raw material or an amount of flux to be added to the raw material. Specifically, for example, in order to adjust an amount of calcium (Ca) in the slag, a flux containing calcium (Ca) is added to a target to be treated and the amount of the slag component can be adjusted by controlling the added mount of the flux. As described above, examples of the flux containing calcium include calcium oxide (CaO) and calcium carbonate (CaCO₃). Further, in order to adjust an amount of lithium (Li) or aluminum (Al) in the slag, the composition of the raw material can be controlled in the preparation step.

With regard to component compositions of the alloy to be generated, if a mass ratio represented by Cu/(Cu+Ni+Co) is excessively low, specifically, if the mass ratio is less than 0.2, the liquidus temperature of the ternary alloy Cu-Ni-Co becomes high, resulting in a relationship "slag liquidus temperature < alloy liquidus temperature". In such a situation, in order to melt the alloy, it is necessary to excessively heat the slag, and thus a slag coating does not easily form on the furnace wall of the melting furnace, resulting in erosion of refractory materials of the furnace wall.

As the melting furnace, when a furnace having a heat source in a slag side, which is above the alloy, for example, a submerged arc furnace, is used, the temperature of the alloy is lower than the temperature of the slag by 100°C or more in some cases. It is therefore more preferable to set the liquidus temperature of the alloy to be lower than the liquidus temperature of the slag by 100°C or more.

An amount of alloy components (Cu, Ni, and Co) can be easily controlled by adjusting a composition of a raw material. Specifically, the control can be achieved by confirming the composition of a raw material in the preparation step and controlling blending.

In the reductive melting treatment, it is preferable to set heating temperature (slag heating temperature) to 1,400°C or higher and 1,600°C or lower. It is more preferable to set the slag heating temperature to 1,500°C or more and to 1,600°C or lower. When the slag heating temperature exceeds 1,600°C, thermal energy is wastefully consumed, and the refractory materials such as crucibles constituting the melting furnace are rapidly consumed, resulting in a decrease in productivity. On the other hand, when the slag heating temperature is lower than 1,400°C, the separability between the generated slag and the alloy deteriorates, and the recovery ratio of the valuable metal may decrease.

The melting furnace desirably includes a mechanism for cooling the furnace wall from the outside by water cooling or the like. By cooling the furnace wall from the outside, the temperature of the slag in contact with the inner refractory surface can be lowered below the liquidus temperature of the slag, and a solidified layer (slag coating layer) of the slag can be effectively formed on the refractory surface. When the slag coating layer is formed in this manner, the refractory material is protected, and the erosion of the refractory material can be more effectively prevented.

When the oxidative roasting treatment (oxidative roasting step) is performed prior to the reductive melting treatment, it is not necessary to perform the oxidation treatment in the reductive melting treatment. However, when the oxidation in the oxidative roasting treatment is insufficient or a further adjustment of a degree of oxidation is intended, an additional oxidation treatment may be performed in the reductive melting treatment or after the reductive melting treatment. By performing the additional oxidation treatment, the degree of oxidation can be adjusted more strictly.

As a method for additionally performing an oxidation treatment, a method can be exemplified, which includes blowing an oxidizing agent into a molten product generated by the reductive melting treatment. Specifically, the oxidation treatment is performed by inserting a metal tube (lance) into a molten product generated in the reductive melting treatment and blowing an oxidizing agent by bubbling. In this case, a gas containing oxygen such as air, pure oxygen, or an oxygen-enriched gas can be used as the oxidizing agent.

Further, in the reductive melting treatment, harmful substances such as dust or exhaust gas may be generated, but the harmful substances can be made harmless by performing a treatment such as a known exhaust gas treatment.

### [Oxidative Roasting Step]

In the method according to the present embodiment, a step (oxidative roasting step) of oxidatively roasting the raw material to obtain an oxidatively roasted product may be further provided prior to the reductive melting treatment, if necessary.

The oxidative roasting treatment (oxidation treatment) is a treatment in which a raw material is subjected to oxidative roasting to obtain an oxidatively roasted product, and even when carbon is contained in the raw material, the carbon can be oxidatively removed and alloy integration of valuable metals in the reductive melting treatment is promoted. Specifically, in the reductive melting treatment, a valuable metal is reduced to locally melted fine particles. At this time, carbon contained in the charge becomes a physical obstruction when the melted fine particles (valuable metal) flocculate, and prevents the melted fine particles from flocculating and integrating, which disturbs separability between the metal (alloy) and the slag, resulting in a decrease in the recovery ratio of the valuable metal. In this respect, by subjecting the raw material to an oxidative roasting treatment prior to the reductive melting treatment, carbon in the raw material can be effectively removed, whereby flocculation and integration of the melted fine particles (valuable metal) generated in the reductive melting treatment progresses, which further increases the recovery ratio of the valuable metal.

In the oxidative roasting treatment, the degree of oxidation can be adjusted as follows. That is, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. In the oxidative roasting treatment, oxidation is allowed to proceed until the entire amount of aluminum (Al) is oxidized. The treatment may be performed until a part of iron (Fe) is oxidized, but it is preferable to keep the degree of oxidation to such an extent that cobalt (Co) is not oxidized and is not recovered as a slag.

When adjusting the degree of oxidation in the oxidative roasting treatment, it is preferable to introduce an appropriate amount of an oxidizing agent. In particular, when a raw material including a discarded lithium ion battery is used, it is preferable to introduce an oxidizing agent for treatment. The lithium ion battery includes a metal such as aluminum or iron as an exterior material. Further, an aluminum foil or a carbon material is contained as a positive electrode material or a negative electrode material. Further, in the case of an assembly battery, plastic is used as an exterior package. Since all of the above are materials that act as a reducing agent, the degree of oxidation can be adjusted within an appropriate range by introducing an oxidizing agent.

The oxidizing agent is not particularly limited as long as it can oxidize carbon or a metal having a low added value (Al or the like), but an oxygen-containing gas, such as air, pure oxygen, or an oxygen-enriched gas, which is easy to handle, is preferable. An introduction amount of the oxidizing agent is about 1.2 times (for example, about 1.15 times to 1.25 times) an amount (chemical equivalent) required for oxidation of target substances of the oxidative roasting treatment.

A heating temperature of the oxidative roasting treatment is preferably from 700°C or higher and 1,100°C or lower, and more preferably 800°C or higher and 1,000°C or lower. By setting the heating temperature to 700°C or higher, the oxidation efficiency of carbon can be further increased, and the oxidation time can be shortened. By setting the heating temperature to 1,100°C or lower, a thermal energy cost can be suppressed and efficiency of oxidative roasting can be increased.

The oxidative roasting treatment can be performed using a known roasting furnace. Further, it is preferable to use a furnace (preliminary furnace) different from the melting furnace, which is used in the treatment in the reductive melting treatment, and to perform the oxidative roasting treatment in the preliminary furnace. As a roasting furnace, any type of furnace can be used as long as it is a furnace capable of supplying an oxidant (oxygen or the like) while roasting a pulverized product and performing treatment inside the furnace. Examples thereof include conventionally known rotary kilns and tunnel kilns (hearth furnaces).

### [Slag Separation Step]

In the slag separation step, a slag is separated from the reduced product obtained by the reductive melting treatment, and an alloy containing a valuable metal is recovered. Since the slag and the alloy have different specific gravities, the slag having a lower specific gravity than the alloy gathers in the upper portion of the alloy, and separation and recovery can be efficiently performed by specific gravity separation.

After the slag is separated from the reduced product in the slag separation step and an alloy is recovered, a sulfurization step of sulfurizing the obtained alloy or a pulverization step of pulverizing a mixture containing the sulfide obtained in the sulfurization step and the alloy may be provided. Further, the alloy of the valuable metal obtained through such a pyrometallurgical smelting process may be subjected to a hydrometallurgical smelting process. By the hydrometallurgical smelting process, it is possible to remove impurity components, thereby separating and purifying valuable metals (Cu, Ni, Co) and recovering them. Examples of the treatment in the hydrometallurgical smelting process include known methods such as neutralization treatment and solvent extraction treatment.

As described above, in the method according to the present embodiment, the reductive melting treatment is performed so that the liquidus temperature in the state diagram of Al₂O₃-Li₂O-CaO ternary slag to be generated is higher than the liquidus temperature in the state diagram of Cu-Ni-Co ternary alloy to be generated. Further, the reductive melting treatment is performed by setting the slag heating temperature, preferably to 1,400°C or higher and 1,600°C or lower, and more preferably to 1,500°C or higher and 1,600°C or lower.

Also, by not excessively lowering the melting point of the slag, a coating can be applied between the slag and the furnace wall refractory, which protects the refractory of the side wall of the melting furnace and enables stable operation with high safety.

At this time, since the slag heating temperature is preferably 1,500°C or higher, the temperature of the metal is approximately 1,400°C or higher. Therefore, it is possible to ensure that operation temperature of the metal is equal to or higher than the melting point of the metal, enabling maintenance of the flowability of the metal. As an alloy to be obtained, it is preferable to target an alloy having a melting point of 1,400°C or lower.

### <<2. Method of Producing Value Metal from Discarded Lithium Ion Battery>>

In the method according to the present embodiment, the raw material to be processed is not limited as long as it contains at least lithium (Li), aluminum (Al), and a valuable metal. Among them, the raw material preferably includes a waste lithium ion battery.

A discarded lithium ion battery contains lithium (Li) and valuable metals (Cu, Ni, Co), and contains metals (Al, Fe, etc.) having low added values and carbon components. Therefore, by using a discarded lithium ion battery as a raw material, valuable metals can be efficiently separated and recovered. The phrase, discarded lithium ion battery, is a concept including not only used lithium ion batteries, but also defective products produced in the production process of positive electrode materials etc., which constitute batteries, residual materials during the production process, and waste materials, such as scrap, generated in the production process of lithium ion batteries. Therefore, the discarded lithium ion battery can also be referred to as a lithium ion battery waste material.

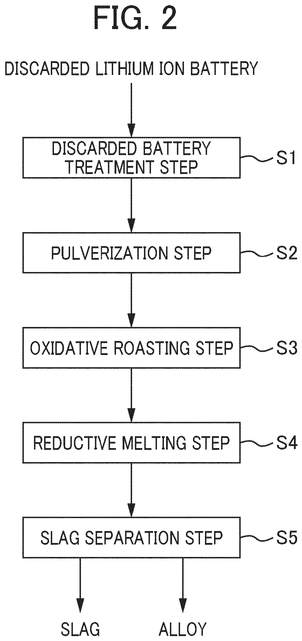

FIG. 2 is a process diagram showing an example of a flow of the method for producing a valuable metal from a discarded lithium ion battery. As shown in FIG. 2, this method includes a discarded battery pretreatment step (S1) of removing an electrolytic solution and an outer can of the discarded lithium ion battery, a pulverization step (S2) of pulverizing the content of the discarded battery to obtain a pulverized product, an oxidative roasting step (S3) of oxidatively roasting the pulverized product, a reductive melting step (S4) of reductively melting the oxidatively roasted product to form an alloy, and a slag separation step (S5) of separating a slag from the reduced product obtained by the reductive melting treatment to recover the alloy.

Although not shown, after the slag separation step (S5), a sulfurization step of sulfurizing the obtained alloy or a pulverization step of pulverizing a mixture of a sulfide obtained in the sulfurizing step and the alloy may be provided. The details of each step will be described below.

### (Discarded Battery Pretreatment Step)

The discarded battery pretreatment step (S1) is performed to prevent explosion of the discarded lithium ion battery as a raw material, detoxify the same, and remove the outer can. Since the lithium ion battery is a closed system, it contains an electrolytic solution etc. inside. Therefore, if the battery is pulverized in its original state, it may explode, which is dangerous, and thus it is preferable to perform discharge treatment or electrolytic solution removal treatment by using some kind of method. Outer cans are often made of aluminum (Al) or iron (Fe), which are metals, and it is relatively easy to recover such metal outer cans as they are. Thus, the electrolytic solution and outer can are removed in the discarded battery pretreatment step (S1), whereby safety can be enhanced, and the recovery ratio of valuable metals (Cu, Ni, and Co) can be increased.

Although the specific method in the discarded battery pretreatment step (S1) is not particularly limited, a method can be exemplified, in which the electrolytic solution is removed by physically opening holes in the discarded battery, for example, with a tip of a needle-like blade. Another method is to burn the discarded battery to detoxify it.

### (Pulverization Step)

In a pulverization step S2, the content of the discarded lithium ion battery is pulverized to obtain a pulverized product. The pulverization treatment in the pulverization step S2 is intended to enhance the reaction efficiency of the pyrometallurgical smelting process. The recovery ratio of valuable metals (Cu, Ni, and Co) can be increased by enhancing the reaction efficiency.

The specific pulverization method is not particularly limited. The content of the discarded lithium ion battery can be pulverized using a conventionally known pulverizer, such as a cutter-mixer.

When aluminum (Al) or iron (Fe) contained in the outer can is recovered, the pulverized product may be sieved using a sieve shaker. Aluminum (Al) can be efficiently recovered because it is easily pulverized to powder by light pulverization. Further, iron (Fe) contained in the outer can may be recovered by magnetic force sorting.

A discarded battery pretreatment step S1 combined with the pulverization step S2 corresponds to the "preparation step" described above.

### (Oxidative Roasting Step)

In an oxidative roasting step S3, the pulverized product obtained in the pulverization step S2 is oxidatively roasted to obtain an oxidatively roasted product. This step corresponds to the "oxidative roasting step" described above, and details thereof are as described above.

### (Reductive Melting Step)

In a reductive melting step S4, the oxidatively roasted product obtained in the oxidative roasting step S3 is subjected to reductive melting treatment to obtain a reduced product. This step corresponds to the "reductive melting step" described above, and details thereof are as described above.

Particularly, the method according to the present embodiment is characterized in that, in the reductive melting step, the treatment is performed so that the liquidus temperature in the state diagram of Al₂O₃-Li₂O-CaO ternary slag to be generated is higher than the liquidus temperature in the state diagram of Cu-Ni-Co ternary alloy to be generated. This makes it possible to safely perform treatment, while suppressing erosion of refractory materials constituting side walls of a melting furnace, and to recover the valuable metals at a high recovery ratio.

### (Slag Separation Step)

In the slag separation step S5, the slag is separated from the reduced product obtained in the reductive melting step S4 to recover the alloy. This step corresponds to the "slag separation step" described above, and details thereof are as described above.

After the slag separation step, a sulfurization step or a pulverization step may be provided. Further, the obtained valuable metal alloy may be subjected to a hydrometallurgical process. The sulfurization step, the pulverization step, and the hydrometallurgical process are as described above in detail.

### EXAMPLES

Hereinafter, Examples of the present invention will be described in more detail, but the present invention is not limited to the following Examples.

### [Regarding Flow of Recovery Treatment of Valuable Metal (Operation of Each Step)]

The treatment for recovering a valuable metal was performed, using discarded lithium ion batteries containing lithium (Li), aluminum (Al), and a valuable metal (Cu, Ni, Co) as a raw material.

### (Discarded Battery Pretreatment Step and Pulverization Step)

First, as discarded lithium ion batteries, 18650 cylindrical batteries, used square batteries for vehicle applications, and defective products collected in the battery production process were prepared. Then, the discarded lithium ion batteries were immersed in salt water to discharge, and the moisture was then removed, followed by roasting in the air at 260°C to decomposed and remove electrolytic solutions and outer cans, thereby obtaining a battery content.

Next, the battery content was pulverized by a pulverizer (trade name: Good Cutter, produced by Ujiie Manufacturing Co., Ltd.) to obtain a pulverized product.

### (Oxidative Roasting Step)

Next, the obtained pulverized product was subjected to oxidative roasting in the air at a heating temperature of 900°C for 180 minutes in a rotary kiln.

### (Reductive Melting Step)

Next, graphite powder was added as a reducing agent in content of 0.6 times a total number of moles of valuable metals (Cu, Ni, Co) (that is, the graphite powder of 1.2 times the number of moles required for reducing the valuable metals), and calcium oxide (CaO) was further added as a flux to the obtained oxidatively roasted product. The flux was added in an amount such that the mass ratio of Al₂O₃/(Al₂O₃+CaO+Li₂O) in the slag to be generated by the reductive melting treatment and the mass ratio of Cu/(Cu+ Ni+Co) in the alloy to be generated were as shown in Table 1 below, and mixed.

Further, as a melting furnace for performing the reductive melting treatment, a submerged arc furnace capable of cooling the furnace wall from the outside by a water-cooling jacket was used. Each test sample was heated to a predetermined reductive melting temperature (slag heating temperature) shown in the following Table 1 and subjected to the reductive melting treatment to alloy the valuable metals to obtain an alloy and a slag.

### (Slag Separation Step)

The slag was separated from the resulting reduced product, the alloy was recovered, and the alloy was determined as a recovered alloy.

### [Component Analysis of Slag and Alloy]

Component analyses of the slag and alloy separated from the reduced product were performed as follows. That is, the obtained slag and alloy were each cooled, pulverized, and analyzed by X-ray fluorescence.

### (Valuable Metal Recovery ratio)

The recovery ratio of the valuable metal (Co) was calculated based on the following equation 1. Note that the component analysis of the recovered alloy was performed by X-ray fluorescence, as described above. Recovery ratio of valuable metal (%) = (Co weight in recovered alloy) / (Co weight in recovered alloy + Co weight in slag) x 100

### [Evaluation Results]

Table 1 below shows the results of cobalt recovery ratios when the treatment was performed by heating at the slag heating temperature of 1,400°C and 1,600°C, varying the mass ratio of Al₂O₃/(Al₂O₃+CaO+Li₂O) of the slag to be obtained and the mass ratio of Cu/(Cu+Ni+Co) of the alloy, and the results regarding presence or absence of a slag coating layer on a furnace wall. Note that confirmation of formation of a slag coating layer was performed by visually confirming the inside of the furnace, after the end of the tests.

FIG. 1 is a state diagram of an Al₂O₃-CaO-Li₂O-based slag, in which the results of the formation of the slag coating layer obtained in the tests have been plotted. Broken lines in FIG. 1 indicate liquiduses calculated by thermodynamic calculation software (FactSage).

**[Table 1]**

| | Raw material | | | Melting temperature | Slag | | | | Alloy | | Cobalt recovery ratio | Presence or absence of slag coating layer |
|---|---|---|---|---|---|---|---|---|---|---|---|---|
| | | | | | Estimated slag melting point | Composition | | | Estimated alloy melting point | Composition | | |
| | Oxidatively roasted product | Graphite powder | Flux (CaO) | | | Li₂O/Al₂O₃ | CaO/Al₂O₃ | Al₂O₃/(Al₂O₃+CaO+Li₂O) | | Cu/ (Cu+Ni+Co) | | |
| | (kg) | (kg) | (kg) | (°C) | (°C) | Mass ratio | Mass ratio | Mass ratio | (°C) | Mass ratio | (%) | |
| Example 1 | 300 | 8.5 | 26 | 1500 | 1450 | 0.39 | 0.43 | 0.55 | 1320 | 0.50 | 97.5 | Present |
| Example 2 | 300 | 8 | 26 | 1550 | 1500 | 0.25 | 0.42 | 0.60 | 1360 | 0.35 | 95.5 | Present |
| Example 3 | 300 | 7.8 | 20 | 1600 | 1570 | 0.22 | 0.33 | 0.65 | 1360 | 0.35 | 97.3 | Present |
| Example 4 | 300 | 7.9 | 23 | 1600 | 1550 | 0.23 | 0.37 | 0.62 | 1420 | 0.20 | 96.9 | Present |
| Example 5 | 300 | 8.3 | 32 | 1500 | 1400 | 0.36 | 0.54 | 0.53 | 1350 | 0.40 | 96.5 | Present |
| Example 6 | 300 | 8.1 | 11 | 1650 | 1620 | 0.26 | 0.20 | 0.69 | 1420 | 0.20 | 95.3 | Present |
| Comparative Example1 | 300 | 9 | 52 | 1400 | 1220 | 0.56 | 0.91 | 0.40 | 1240 | 0.70 | 96.7 | Absent |
| Comparative Example2 | 300 | 9.5 | 43 | 1400 | 1240 | 0.66 | 0.74 | 0.42 | 1240 | 0.70 | 97.5 | Absent |
| Comparative Example3 | 300 | 8.5 | 26 | 1300 | 1450 | 0.39 | 0.43 | 0.55 | 1450 | 0.10 | (insufficient melting) | Present |
| Comparative Example4 | 300 | 8.5 | 26 | 1650 | 1450 | 0.36 | 0.43 | 0.55 | 1450 | 0.10 | 97.5 | Absent |

As can be seen from the results in Table 1, in Examples 1 to 5, the slag coating layer was formed on the furnace wall of the melting furnace to protect the refractory material, the separability between the slag and the metal was good, and good results were obtained that the cobalt recovery ratio was 95% or more in all samples.

In Example 6, the estimated melting point of slag was 1,620°C and thus, the treatment was carried out, by increasing the operation temperature. As a result, a good cobalt recovery ratio was achieved and formation of the slag coating layer was also confirmed. However, energy consumption for melting increased.

On the other hand, in Comparative Examples 1 and 2, a slag coating layer was not formed, and the refractory material was not protected. This is assumed as follows: since the liquidus temperature of the slag in each composition was too low and an estimated melting point of the slag (estimated slag melting point) was 1,220°C in Comparative Example 1 and 1,240°C in Comparative Example 2; the slag did not solidify even when the furnace wall was cooled; and therefore, the slag coating layer was not formed.

In Comparative Example 3, the estimated alloy melting point of the composition was 1450°C, and thus the alloy was not sufficiently melted, resulting in inefficient recovery of the valuable metal. That is, since the liquidus temperature of the alloy was higher than the liquidus temperature of the slag, the alloy solidified, and thus, recovery was difficult. In Comparative Example 4, the alloy could be melted by increasing the slag heating temperature (melting temperature) compared to Comparative Example 3, and could be recovered. However, by having excessively increased the temperature, a slag coating layer did not form, and thus the refractory material was not protected.

## Claims

1. A method of producing a valuable metal from a raw material comprising the valuable metal comprising copper (Cu), nickel (Ni), and cobalt (Co), the method comprising:
a preparation step of preparing a raw material containing at least lithium (Li), aluminum (Al), and the valuable metal;
a reductive melting step of subjecting the raw material to a reductive melting treatment to obtain a reduced product comprising a slag and an alloy comprising the valuable metal; and
a slag separation step of separating the slag from the reduced product to recover the alloy,
wherein, in one or both of the preparation step and the reductive melting step, a flux containing calcium (Ca) is added to the raw material,
and in the reductive melting step, the reductive melting treatment is performed so that liquidus temperature in a state diagram of an Al₂O₃-Li₂O-CaO ternary slag is higher than liquidus temperature in a state diagram of a Cu-Ni-Co ternary alloy.

2. The method for producing a valuable metal according to claim 1,
wherein, in the reductive melting step, the reductive melting treatment is performed so that a mass ratio of Al₂O₃/(Al₂O₃+CaO+Li₂O) in the slag to be generated is 0.5 or more and 0.65 or less, and a mass ratio of Cu/(Cu+Ni+Co) in the alloy to be generated is 0.2 or more.

3. The method for producing a valuable metal according to claim 1 or 2,
wherein the raw material comprises a discarded lithium ion battery.

4. The method for producing a valuable metal according to any one of claims 1 to 3,
wherein a melting furnace to be used in the reductive melting step is provided with a means for cooling a furnace wall from outside.

5. The method for producing a valuable metal according to any one of claims 1 to 4,
further comprising an oxidative roasting step of oxidatively roasting the raw material into an oxidatively roasted product prior to the reductive melting treatment, and subjecting the obtained oxidatively roasted product to the reductive melting treatment.
